# EUROPEAN PATENT APPLICATION

(11) **EP 4 583 386 A1**
(43) Date of publication of application: **09.07.2025**
(21) Application number: 23869759.3
(22) Date of filing: 21.06.2023
(51) Int. Cl.: H02M 1/32

(54) **FAULT RIDE-THROUGH METHOD AND CONVERTER**

(30) Priority: 26.09.2022 CN 202211177155
(71) Applicant: Huawei Digital Power Technologies Co., Ltd., Shenzhen, Guangdong 518043 (CN)
(72) Inventor: ZHANG, Meiqing, Shenzhen, Guangdong 518043 (CN); DONG, Mingxuan, Shenzhen, Guangdong 518043 (CN); ZHOU, Jiuyang, Shenzhen, Guangdong 518043 (CN); XIN, Kai, Shenzhen, Guangdong 518043 (CN)
(74) Representative: Isarpatent
(86) International application number: PCT/CN2023/101717
(87) International publication number: WO 2024/066511

(57) **Abstract**

This application provides a fault ride-through method, applied to a converter, where the converter includes a conversion circuit and a filter inductor, an input of the conversion circuit is configured to connect to a direct current source, a first end of the filter inductor is configured to connect to an output of the conversion circuit, and a second end of the filter inductor is configured to connect to a load. The fault ride-through method is performed by the converter, and the fault ride-through method includes: detecting an internal potential vector at the first end of the filter inductor and a terminal voltage vector at the second end; and when an amplitude of the terminal voltage vector at the second end of the filter inductor is reduced to be less than or equal to a preset terminal voltage extremum, reducing the internal potential vector at the first end of the filter inductor, to reduce an amplitude of a filter inductor current vector on the filter inductor to be less than or equal to a preset current limit value, where the internal potential vector, the terminal voltage vector, and the filter inductor current vector form a trigonometric function relationship. This application further provides a converter.

## Description

### CROSS-REFERENCE TO RELATED APPLICATIONS

This application claims priority to Chinese Patent Application No. 202211177155.3, filed with the China National Intellectual Property Administration on September 26, 2022 and entitled "FAULT RIDE-THROUGH METHOD AND CONVERTER", which is incorporated herein by reference in its entirety.

### TECHNICAL FIELD

This application relates to the field of power electronics technologies, and in particular, to a fault ride-through method and a converter to which the fault ride-through method is applied.

### BACKGROUND

Power supplies such as wind power, photovoltaics, and energy storage gradually become main power supplies of grids. The power supplies are connected to the grids by using converters (or referred to as converters). Conventional grid-following (Grid-following) control methods of grid-connected converters make new energy present current source characteristics, cannot provide frequency and voltage support for the grids like conventional synchronous generators, and cannot operate in off-grid conditions. As a result, stability and power supply reliability of power systems with high proportions of new energy are greatly challenged. Grid-forming (Grid-forming) control is a control method that can make power electronic converters have external characteristics of the synchronous generators, can provide necessary voltage and frequency support for the grids, and can operate stably in grid-connected or off-grid conditions, thereby having a wide application prospect in power systems.

A converter uses a grid-forming (Grid-forming) control manner having a grid-forming capability, to establish a stable alternating voltage and frequency for a grid. However, a power electronic device has a poor overcurrent capability, and is not capable of providing a large short-circuit current in a short time during a short-circuit fault of the grid. During the short-circuit fault, if no control is performed on the converter in grid-forming control, the converter automatically generates a large short-circuit current based on a grid fault condition, causing damage to the power electronic device.

Currently, a fault ride-through manner applied to a converter is to add a hardware device in a grid to provide a current for the grid during a fault. This manner is not conducive to cost control due to addition of the hardware device. Another fault ride-through manner is to switch to a grid-following current source control strategy during a fault. During the fault, a converter loses a grid-forming capability. This is not conducive to grid stability. Still another fault ride-through manner uses a combination of virtual impedance and current limiting. However, in this manner, it is difficult to accurately limit a current amplitude. This is mainly because if the virtual impedance is excessively large, the current amplitude is small, and a current capability is not fully used to provide support for the grid; or if the virtual impedance is excessively small, a voltage loop is saturated, and a voltage recovery speed is slow after a fault is removed. In addition, the virtual impedance varies based on different fault conditions and different grid operating conditions. As a result, it is difficult to determine a parameter. In addition, this manner easily causes reduction in system stability.

### SUMMARY

A first aspect of this application provides a fault ride-through method, applied to a converter, where the converter includes a conversion circuit and a filter inductor, an input of the conversion circuit is configured to connect to a direct current source, a first end of the filter inductor is configured to connect to an output of the conversion circuit, and a second end of the filter inductor is configured to connect to a load. The fault ride-through method is performed by the converter, and the fault ride-through method includes: detecting an internal potential vector at the first end of the filter inductor and a terminal voltage vector at the second end; and when an amplitude of the terminal voltage vector at the second end of the filter inductor is reduced to be less than or equal to a preset terminal voltage extremum, reducing the internal potential vector at the first end of the filter inductor, to reduce an amplitude of a filter inductor current vector on the filter inductor to be less than or equal to a preset current limit value, where the internal potential vector, the terminal voltage vector, and the filter inductor current vector form a trigonometric function relationship.

In the foregoing fault ride-through method, when it is detected that the amplitude of the terminal voltage vector is less than the preset terminal voltage extremum, it is determined that a voltage output by an output (namely, the second end) of a conversion apparatus is abnormal (a low voltage). In this case, based on a constraint relationship among the internal potential vector at the first end, the terminal voltage vector at the second end, and the filter inductor current vector on the filter inductor, and based on a correspondence between a filter inductor voltage drop vector and the filter inductor current vector, an amplitude of the internal potential vector is reduced, so that an amplitude of the filter inductor voltage drop vector can be constrained. In this way, an amplitude of the filter inductor current vector can be constrained to be within the preset current limit value (less than or equal to the current limit value). This helps prevent the amplitude of the filter inductor current vector from exceeding the current limit value, and implement a quick current response of the converter when the output voltage is abnormal; maintain a grid-forming capability of the conversion apparatus when the output voltage is abnormal to quickly provide voltage support; and quickly restore the voltage output by the converter after the fault is removed. Further, in the foregoing fault ride-through method and the converter to which the method is applied, the foregoing beneficial effect is achieved by using the foregoing control procedure, without a need to add or modify a hardware structure. This further helps reduce costs.

In some embodiments, the current limit value is less than or equal to an upper limit value bearable by a hardware capability of the converter or allowable for normal operation, and when the amplitude of the terminal voltage vector at the second end of the filter inductor is less than the preset terminal voltage extremum and the filter inductor current vector is greater than the upper limit value, the internal potential vector at the first end of the filter inductor is controlled to decrease by using the converter, so that the filter inductor current vector is reduced to be less than or equal to the upper limit value.

In this way, when the output voltage of the converter is abnormal, and consequently the amplitude of the terminal voltage vector is reduced, the internal potential vector is reduced, so that an amplitude of the filter inductor voltage drop vector can be effectively suppressed, to control the amplitude of the filter inductor current vector to be within the current limit value.

In some embodiments, the upper limit value is greater than a rated current value of the converter.

When the voltage output by the conversion apparatus to the load is abnormal (low voltage), the upper limit value is greater than a rated current boundary value. This helps quickly provide voltage support.

In some embodiments, a current vector feedback value at the second end of the filter inductor or a current vector reference value of the converter is used as the amplitude of the filter inductor current vector.

If either the current vector feedback value or the current vector reference value is greater than the preset current limit value, it may be considered that the output voltage at the output of the conversion apparatus is abnormal.

In some embodiments, a vector value with a larger absolute value in the current vector feedback value and the current vector reference value is used as the amplitude of the filter inductor current vector.

The current vector reference value is a current vector reference value at the second end under control of a voltage loop, and the current vector feedback value is an actually detected current value output by the second end. When the converter operates normally, the current vector reference value is basically the same as the current vector feedback value. If the converter operates abnormally, the current vector reference value may be different from the current vector feedback value. When either the current vector reference value or the current vector feedback value is greater than the current limit value, it indicates that the converter operates abnormally. Therefore, one with a larger absolute value of the current vector reference value and the current vector feedback value is compared with the current limit value. When one with a larger absolute value of the current vector reference value and the current vector feedback value is greater than the current limit value, it is determined that a fault occurs.

In some embodiments, when the filter inductor current vector is greater than the upper limit value, the fault ride-through method further includes: starting timing of duration; and switching the current limit value from a first limit value to a second limit value when the duration is greater than preset duration, where the first limit value is greater than the second limit value.

In some embodiments, the switching the current limit value from a first limit value to a second limit value includes: switching the current limit value from the first limit value to the second limit value in a step-wise manner, a ramp-wise manner, or an exponential manner.

Increasing the current limit value helps further improve a current response speed and a voltage recovery level and speed of the converter.

In some embodiments, the fault ride-through method further includes: maintaining the current limit value unchanged when the duration is less than or equal to the preset duration.

The duration is duration in which the amplitude of the filter inductor current vector is between a maximum current limit boundary value and the rated current boundary value, and is also equal to duration in which the current limit value is set to the first limit value. The preset duration is further set, to prevent the converter from being damaged. The preset duration is set to limit duration in which the amplitude of the filter inductor current vector is between the maximum current limit boundary value and the rated current boundary value. In other words, when duration in which the amplitude of the filter inductor current vector at the second end is between the maximum current limit boundary value and the rated current boundary value is greater than the preset duration, the converter has a risk of being damaged.

In some embodiments, the fault ride-through method further includes: when the amplitude of the filter inductor current vector is less than or equal to the current limit value, resetting the duration to zero.

When it is determined that the amplitude of the filter inductor current vector is less than or equal to the current limit value, it is determined that no fault occurs, and no low voltage ride-through or timing is required.

In some embodiments, the reducing the internal potential vector at the first end of the filter inductor includes: generating an internal potential reference correction value based on a difference between the amplitude of the filter inductor current vector and the current limit value; generating an internal potential vector instruction based on the internal potential reference correction value and an internal potential vector reference value of the converter; and reducing the internal potential vector based on the internal potential vector instruction.

In this way, a grid-forming capability of the converter is maintained when the output voltage drops, to ensure that a voltage output to the load is stable.

In some embodiments, the fault ride-through method further includes: correcting the current vector reference value based on the internal potential vector instruction and a voltage vector feedback value; setting one with a smaller absolute value of a corrected current vector reference value and the current limit value as a current vector instruction; and generating a modulated wave based on the current vector instruction, the current vector feedback value, and a phase reference value in the converter, where the modulated wave is used to modulate a power signal provided by the direct current source to provide the power signal to the load.

The current vector instruction is used to determine a specific value by which a filter inductor current needs to be corrected. The corrected current vector reference value calculated in the previous step may be different from the current limit value. The current vector instruction is set to one with a smaller absolute value of the corrected current vector reference value and the current limit value. This helps ensure that a filter inductor current is constrained within the current limit value.

A second aspect of this application provides a converter, where the converter includes: a conversion circuit, where an input of the conversion circuit is configured to connect to a direct current source; a filter inductor, where a first end of the filter inductor is configured to connect to an output of the conversion circuit, and a second end of the filter inductor is configured to connect to a load; a detection circuit, where the detection circuit is connected to the first end and the second end, and is configured to detect an internal potential vector at the first end of the filter inductor and a terminal voltage vector at the second end; and a controller, where the controller is connected to the detection circuit, and is configured to: when an amplitude of the terminal voltage vector at the second end of the filter inductor is reduced to be less than or equal to a preset terminal voltage extremum, reduce the internal potential vector at the first end of the filter inductor, to reduce an amplitude of a current vector on the filter inductor to be less than or equal to a preset current limit value, where the internal potential vector, the terminal voltage vector, and the filter inductor current vector form a trigonometric function relationship.

The foregoing converter includes a controller and a detection circuit. When it is detected that the amplitude of the terminal voltage vector is less than the preset terminal voltage extremum, it is determined that a voltage output by an output (namely, the second end) of a conversion apparatus is abnormal (a low voltage). In this case, based on a constraint relationship among the internal potential vector at the first end, the terminal voltage vector at the second end, and the filter inductor current vector on the filter inductor, and based on a correspondence between a filter inductor voltage drop vector and the filter inductor current vector, an amplitude of the internal potential vector is reduced, so that an amplitude of the filter inductor voltage drop vector can be constrained. In this way, an amplitude of the filter inductor current vector can be constrained to be within the preset current limit value (less than or equal to the current limit value). This helps prevent the amplitude of the filter inductor current vector from exceeding the current limit value, and implement a quick current response of the converter when the output voltage is abnormal; maintain a grid-forming capability of the conversion apparatus when the output voltage is abnormal to quickly provide voltage support; and quickly restore the voltage output by the converter after the fault is removed. Further, in the foregoing converter, the foregoing beneficial effect is achieved by using the foregoing control procedure, without a need to add or modify a hardware structure. This further helps reduce costs.

In some embodiments, the current limit value is less than or equal to an upper limit value bearable by a hardware capability of the converter or allowable for normal operation, and when the amplitude of the terminal voltage vector at the second end of the filter inductor is less than the preset terminal voltage extremum and the filter inductor current vector is greater than the upper limit value, the internal potential vector at the first end of the filter inductor is controlled to decrease by using the converter, so that the filter inductor current vector is reduced to be less than or equal to the upper limit value.

In this way, when the output voltage of the converter is abnormal, and consequently the amplitude of the terminal voltage vector is reduced, the internal potential vector is reduced, so that an amplitude of the filter inductor voltage drop vector can be effectively suppressed, to control the amplitude of the filter inductor current vector to be within the current limit value.

In some embodiments, the controller is configured to: generate an internal potential reference correction value based on a difference between the amplitude of the filter inductor current vector and the current limit value; generate an internal potential vector instruction based on the internal potential reference correction value and an internal potential vector reference value of the converter; and reduce the internal potential vector based on the internal potential vector instruction.

In this way, a grid-forming capability of the converter is maintained when the output voltage drops, to ensure that a voltage output to the load is stable.

In some embodiments, the controller is configured to: correct a current vector reference value based on the internal potential vector instruction and a voltage vector feedback value; set one with a smaller absolute value of a corrected current vector reference value and the current limit value as a current vector instruction; and generate a modulated wave based on the current vector instruction, a current vector feedback value, and a phase reference value in the converter, where the modulated wave is used to modulate a power signal provided by the direct current source to provide the power signal to the load.

The current vector instruction is used to determine a specific value by which a filter inductor current needs to be corrected. The corrected current vector reference value calculated in the previous step may be different from the current limit value. The current vector instruction is set to one with a smaller absolute value of the corrected current vector reference value and the current limit value. This helps ensure that a filter inductor current is constrained within the current limit value.

### BRIEF DESCRIPTION OF DRAWINGS

FIG. 1 is a diagram of an architecture of a converter, a direct current source, and a load according to Embodiment 1 of this application;
FIG. 2 is a diagram of a control phase of a controller in the converter in FIG. 1;
FIG. 3 is a flowchart of a fault ride-through method according to Embodiment 1 of this application;
FIG. 4 is a diagram of a constraint relationship among an internal potential vector, a terminal voltage vector, and a filter inductor voltage drop vector of the converter in FIG. 2 when an output voltage is normal;
FIG. 5 is a diagram of a constraint relationship among an internal potential vector, a terminal voltage vector, and a filter inductor voltage drop vector of the converter in FIG. 2 when an output voltage drops;
FIG. 6 is another flowchart of a fault ride-through method according to Embodiment 1 of this application;
FIG. 7 is a diagram of an application scenario of a converter and a direct current source according to Embodiment 1 of this application;
FIG. 8 is a flowchart of a fault ride-through method according to Embodiment 2 of this application;
FIG. 9 is a diagram of a constraint relationship among an internal potential vector, a terminal voltage vector, and a filter inductor voltage drop vector when an output voltage is normal according to Embodiment 2 of this application;
FIG. 10 is a diagram of a constraint relationship among an internal potential vector, a terminal voltage vector, and a filter inductor voltage drop vector of a converter when an output voltage drops according to Embodiment 2 of this application; and
FIG. 11 is a diagram of simulation waveforms of a voltage and a current that change with time in a low voltage ride-through process in the fault ride-through method according to Embodiment 2 of this application.

### DESCRIPTION OF EMBODIMENTS

The following describes embodiments of this application with reference to the accompanying drawings in embodiments of this application.

### Embodiment 1

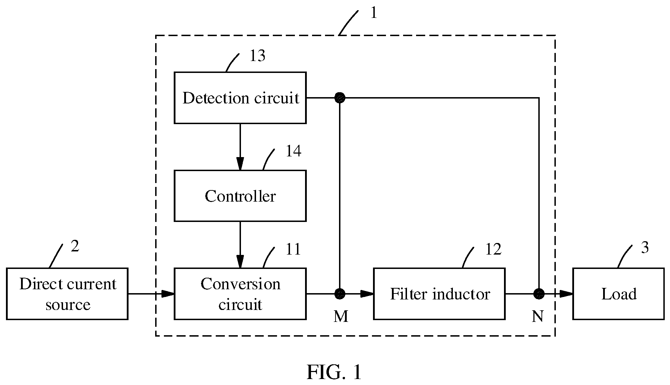

Refer to FIG. 1. An input of a converter 1 in this embodiment is connected to a direct current source 2, and an output is connected to a load 3. In other words, the direct current source 2, the converter 1, and the load 3 are electrically connected in sequence, and the converter 1 is connected between the direct current source 2 and the load 3. The direct current source 2 may be a direct current power supply module such as a photovoltaic module, a wind power module, or a battery module, and is configured to provide a power signal. The converter 1 is configured to modulate the power signal output by the direct current source 2 to a target voltage and a target frequency, and then provide the power signal to the external load 3. The load 3 is, for example, a home electric device.

In this embodiment, the converter 1 includes a conversion circuit 11 and a filter inductor 12. An input of the conversion circuit 11 is the input of the converter 1, and is connected to the direct current source 2. The filter inductor 12 includes a first end M and a second end N. The first end M is connected to an output of the conversion circuit 11, and the second end N is the output of the converter 1 and is connected to the load 3. The conversion circuit 11 is configured to convert a direct current power signal output by the direct current source 2 into an alternating current signal. The filter inductor 12 is configured to filter out a high frequency waveband in a power signal output by the conversion circuit 11. The power signal is used to supply power to the load 3. In this embodiment, the target voltage and the target frequency match the load 3. In this embodiment, the power signal output by the converter 1 may be a single-phase, three-phase, or multi-phase power signal, to match the load 3. For example, in a scenario in which the load 3 is a home electric device, the power signal output by the converter 1 is a single-phase power signal.

In this embodiment, in some scenarios (for example, a three-phase short circuit, a single-phase short circuit, and an inter-phase short circuit), an output voltage at the output (namely, the second end N of the filter inductor 12) of the converter 1 may drop. When the output voltage at the output of the converter 1 drops, an amplitude of a terminal voltage vector Vt at the second end N drops to a value less than a terminal voltage extremum (a system may preset one terminal voltage extremum as a trigger criterion for determining low voltage ride-through), and an amplitude of a filter inductor current vector on the filter inductor 12 increases to exceed a preset current limit value. In this case, the converter 1 is to be disconnected from a grid, and the converter 1 cannot normally supply power to the load 3.

This embodiment provides a fault ride-through method and a converter 1 to which the fault ride-through method is applied, to limit the amplitude of the filter inductor current vector (namely, an output current of the converter 1, namely, a current output by the converter to the load) within the current limit value when the output voltage at the output of the converter 1 drops, and quickly increase the output voltage at the output of the converter 1. This ensures that the load 3 operates stably.

The converter 1 in this embodiment further includes a detection circuit 13 and a controller 14. The detection circuit 13 is separately connected to the first end M and the second end N of the filter inductor 12. The controller 14 is separately connected to the conversion circuit 11 and the detection circuit 13. The detection circuit 13 is configured to detect an internal potential vector E at the first end M and the terminal voltage vector **Vₜ** at the second end N. The controller 14 is configured to control the conversion circuit 11 based on a signal obtained by the detection circuit 13. The conversion circuit 11 is controlled by the controller 14, and modulates the power signal provided by the direct current source 2, so that the converter 1 finally outputs a power signal of a corresponding voltage and frequency to the load 3. In this embodiment, the converter 1 may further include another circuit function module. Details are not described in this application.

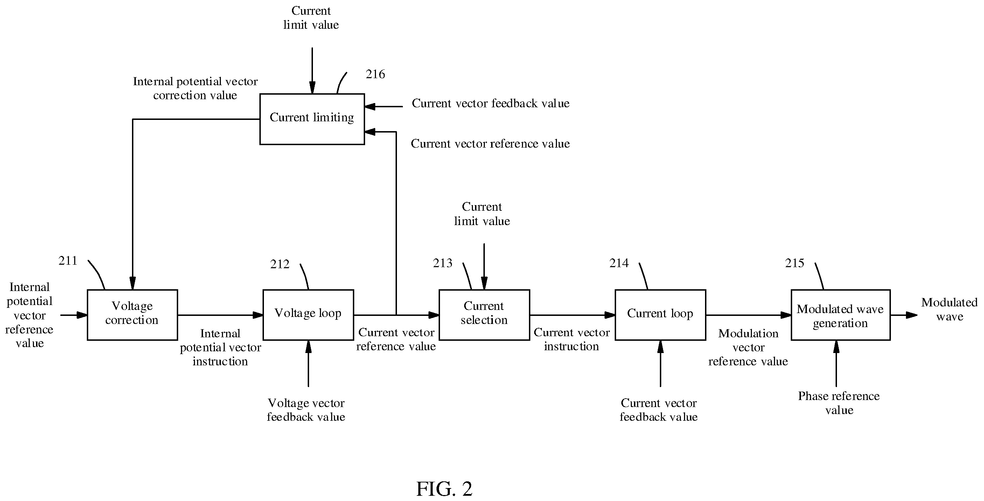

In this embodiment, a control phase of the controller 14 in the converter 1 is shown in FIG. 2. A control procedure of the controller 14 includes voltage correction 211, voltage loop 212, current selection 213, current loop 214, modulated wave generation 215, and current limiting 216.

The voltage loop 212 generates a current vector reference value based on an obtained internal potential vector instruction and a voltage vector feedback value. The phase of current selection 213 is used to generate a current vector instruction based on the obtained current vector reference value and the preset current limit value. The current loop 214 generates a modulation vector reference value based on the obtained current vector instruction and a current vector feedback value. In the phase of modulated wave generation 215, a modulated wave is generated based on the obtained modulation vector reference value and a phase reference value. The current vector feedback value and the current vector reference value are further used to obtain an internal potential vector correction value in the phase of current limiting 216. The internal potential vector instruction is generated in the phase of voltage correction 211 based on a set internal potential vector reference value and the obtained internal potential vector correction value.

In a comparative embodiment, the converter 1 controls the converter by using the voltage loop and the current loop to generate a modulated wave. In this embodiment, the controller 14 in the converter 1 adds the control phases of voltage correction 211, current selection 213, and current limiting 216, so that the converter 1 can implement fault ride-through when the output voltage drops.

FIG. 2 shows only some control phases of the controller 14. The controller 14 may further operate in another necessary control phase such as phase control. Details are not described in this application.

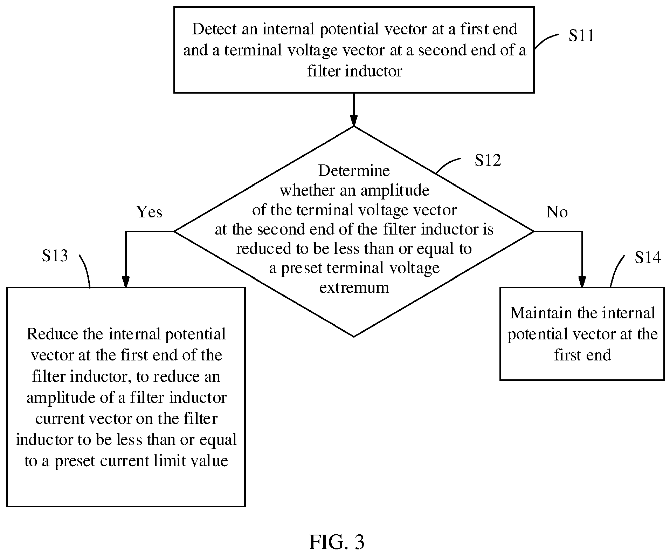

Therefore, refer to FIG. 3. The fault ride-through method in this embodiment includes the following steps.

Step S11: Detect an internal potential vector at the first end of the filter inductor and a terminal voltage vector at the second end.

Step S12: Determine whether an amplitude of the terminal voltage vector at the second end of the filter inductor is reduced to be less than or equal to a preset terminal voltage extremum.

If a determining result is yes, step S13 is performed to reduce the internal potential vector at the first end of the filter inductor, to reduce an amplitude of a filter inductor current vector on the filter inductor to be less than or equal to a preset current limit value.

If a determining result is no, step S14 is performed to maintain the internal potential vector at the first end.

In this embodiment, when the amplitude of the terminal voltage vector at the output of the converter 1 is reduced to be less than or equal to the preset terminal voltage extremum, the filter inductor current vector on the filter inductor 12 exceeds the preset current limit value Imax. In step S12 in this embodiment, whether the filter inductor current vector exceeds the current limit value Imax is detected, to determine whether the amplitude of the terminal voltage vector is reduced to be less than or equal to the preset terminal voltage extremum. In this embodiment, the filter inductor current vector is a three-phase abc alternating current vector, or referred to as a two-phase static αβ current vector, or referred to as a dq-axis rotation current vector.

In this embodiment, a vector value with a larger absolute value of a current vector feedback value detected at the second end N and a current vector reference value in the converter 1 is used as the amplitude of the filter inductor current vector.

The current vector reference value is a current vector reference value at the second end N under control of the voltage loop, and the current vector feedback value is an actually detected current value output by the second end N. When the converter 1 operates normally, the current vector reference value is basically the same as the current vector feedback value. If the converter 1 operates abnormally, the current vector reference value may be different from the current vector feedback value.

When either of the current vector reference value and the current vector feedback value is greater than the current limit value Imax, it indicates that the converter 1 operates abnormally, and an output voltage of the converter 1 drops. Therefore, one with a larger absolute value of the current vector reference value and the current vector feedback value is compared with the current limit value Imax. When one with a larger absolute value of the current vector reference value and the current vector feedback value is greater than the current limit value Imax, it is determined that the output voltage drops. When one with a larger absolute value of the current vector reference value and the current vector feedback value is less than or equal to the current limit value Imax, it is determined that the converter 1 operates normally.

In another embodiment of this application, absolute values of the current vector reference value and the current vector feedback value may not be compared. Instead, the current vector feedback value or the current vector reference value is directly used as the amplitude of the filter inductor current vector. In this embodiment, a vector value with a larger absolute value of the current vector reference value and the current vector feedback value is used as the amplitude of the filter inductor current vector, to help improve accuracy of determining whether the converter operates abnormally.

The current limit value Imax is a preset current value. In this embodiment, the current limit value Imax is less than or equal to an upper limit value bearable by a hardware capability of the converter 1 or allowable for normal operation. In this embodiment, the upper limit value is greater than a rated current value of the converter 1. When the converter 1 operates, the amplitude of the filter inductor current vector on the filter inductor 12 needs to be controlled within the current limit value Imax (that is, less than or equal to the current limit value Imax).

When the output voltage of the converter 1 drops, the amplitude of the filter inductor current vector may be allowed to be greater than the rated current value. The amplitude of the filter inductor current vector is made greater than the rated current value, to help quickly increase the output voltage when the output voltage of the converter 1 drops.

In this embodiment, a change of a filter inductance value of the filter inductor 12 is basically small, and it may be considered that a change of a filter inductor voltage drop vector **Vf** of the filter inductor 12 mainly depends on a change of the filter inductor current vector. A vector boundary V1 that is of the filter inductor voltage drop vector **Vf** and that corresponds to the current limit value of the converter 1 may be obtained based on the current limit value of the converter 1. Limiting the filter inductor current vector output by the converter 1 may be implemented by limiting an amplitude of the filter inductor voltage drop vector **Vf.**

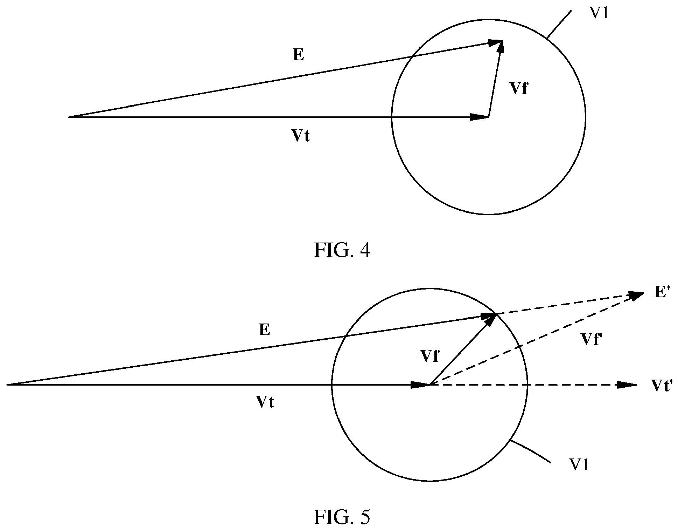

When the converter 1 operates normally, a trigonometric function relationship exists among the internal potential vector **E** at the first end M, the terminal voltage vector **Vt** at the second end N, and the filter inductor current vector on the filter inductor 12, and the filter inductor voltage drop vector **Vf** changes with the filter inductor current vector. Therefore, when the converter 1 operates normally, a trigonometric function relationship also exists among the internal potential vector **E** at the first end M, the terminal voltage vector **Vt** at the second end N, and the filter inductor voltage drop vector **Vf** of the filter inductor 12. A constraint relationship among the internal potential vector **E,** the terminal voltage vector **Vt,** and the filter inductor voltage drop vector **Vf** is shown in FIG. 4, namely, **Vt+Vf=E.** The amplitude of the filter inductor voltage drop vector **Vf** falls within (is less than or equal to) the vector boundary V1. If it is taken into account that the output voltage of the converter 1 drops, and consequently the amplitude of the terminal voltage vector **Vt** drops, the constraint relationship among the internal potential vector **E,** the terminal voltage vector **Vt,** and the filter inductor voltage drop vector **Vf** is still maintained.

However, refer to FIG. 5. If the internal potential vector at the first end M maintains a constant voltage source mode and remains at **E'** (as shown by a dashed line), because the amplitude of the terminal voltage vector **Vt** drops, the amplitude of the filter inductor voltage drop vector **Vf'** in this case exceeds the vector boundary V1, which means that the amplitude of the filter inductor current vector on the filter inductor 12 in this case also exceeds a boundary value of a maximum allowed operating current of the converter 1.

Therefore, in this embodiment, in step S13, the value of the internal potential vector is reduced to **E.** In this way, the filter inductor voltage drop vector **Vf** can be effectively constrained, based on the constraint relationship among the internal potential vector **E,** the terminal voltage vector **Vt** at the second end N, and the filter inductor voltage drop vector **Vf,** not to exceed the vector boundary V1. Correspondingly, this implements that the amplitude of the filter inductor current vector is limited within the current limit value Imax.

Therefore, the fault ride-through method and the converter 1 in this embodiment help rapidly increase a current at the second end N when the output voltage of the converter 1 drops, to support a voltage at the second end N, on a basis of keeping the amplitude of the filter inductor current vector not exceeding the current limit value Imax, so that the output of the converter 1 stably supplies power to the load 3.

In this embodiment, step S13 specifically includes the following steps.

Step S131: Generate an internal potential reference correction value based on a difference between the amplitude of the filter inductor current vector and the current limit value.

Step S132: Generate an internal potential vector instruction based on the internal potential reference correction value and an internal potential vector reference value of the converter, and reduce the internal potential vector based on the internal potential vector instruction.

In this embodiment, in step S131, a difference between one with a larger absolute value of the current vector feedback value and the current vector reference value and the current limit value Imax is calculated, and an obtained current error is used to obtain through calculation the internal potential reference correction value based on a preset algorithm. In this embodiment, the foregoing preset algorithm includes one or a combination of a plurality of phases in a proportional phase, an integral phase, a cross coupling phase, and a nonlinear control phase.

In this embodiment, in step S132, weighted addition is performed on the internal potential reference correction value and a preset internal potential vector reference value, to obtain through calculation the internal potential vector instruction. The internal potential vector instruction may be used to determine a specific amplitude that needs to be reduced from the internal potential vector at the first end M.

In this embodiment, if a determining result in step S12 is no, it indicates that the converter 1 operates normally and the output voltage is normal. In this case, step S14: Maintain a value of the internal potential vector at the first end M is performed. In other words, the internal potential reference correction value is 0, and the value of the internal potential vector is kept unchanged.

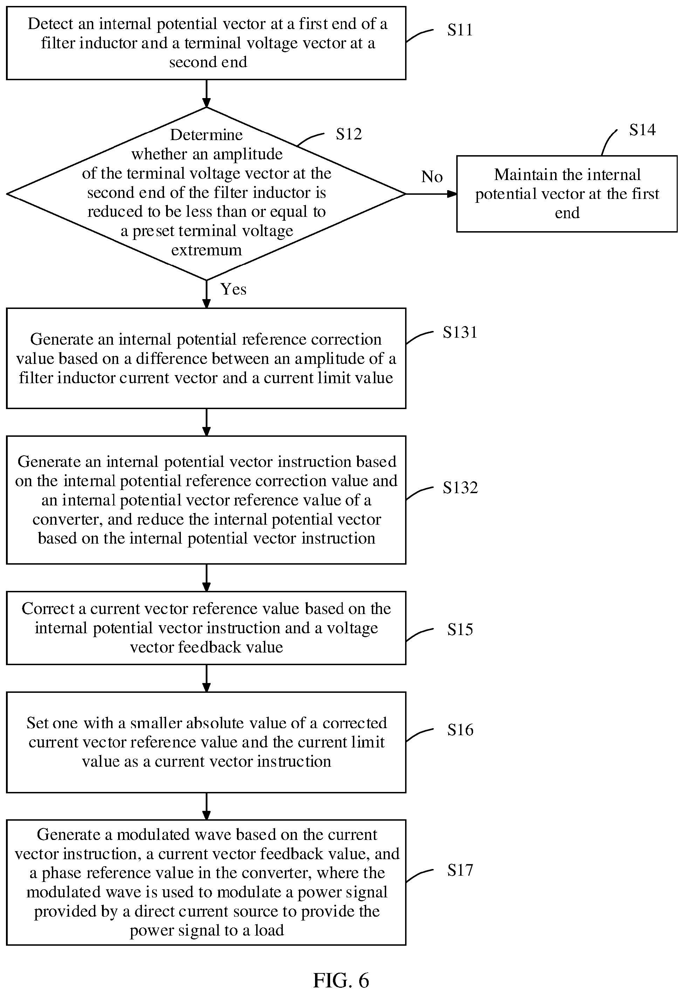

Refer to FIG. 6. After step S132, the converter fault ride-through method in this embodiment further includes the following steps.

Step S15: Correct the current vector reference value based on the internal potential vector instruction and a voltage vector feedback value.

Step S16: Set one with a smaller absolute value of a corrected current vector reference value and the current limit value as a current vector instruction.

Step S17: Generate a modulated wave based on the current vector instruction, the current vector feedback value, and a phase reference value in the converter, where the modulated wave is used to modulate a power signal provided by the direct current source to provide the power signal to the load.

In this embodiment, in step S15, a preset current vector reference value may be corrected based on the internal potential vector instruction and the voltage vector feedback value, to obtain a new current vector reference value. In step S16, the current vector instruction is used to determine a specific value by which an amplitude of the filter inductor current vector needs to be corrected. The corrected current vector reference value calculated in the previous step may be different from the current limit value. In this embodiment, the current vector instruction is set to one with a smaller absolute value of the corrected current vector reference value and the current limit value. This helps ensure that the amplitude of the filter inductor current vector is constrained within the current limit value.

The control module 21 further presets the phase reference value. In step S17 of this embodiment, the corresponding modulated wave is generated based on the phase reference value, the current vector instruction set in the foregoing step, and the obtained current vector feedback value, where the modulated wave is used to control the conversion circuit 11 in the converter 1 to operate. In this embodiment, the conversion circuit 11 includes a plurality of switch elements, and the modulated wave is used to control each switch element to be turned on or turned off, to modulate a power signal output at the second end N. In this embodiment, when the fault of the converter is cut off, the output voltage is restored.

In some embodiments, the controller 14 in this embodiment includes a terminal that can automatically perform numerical calculation and/or information processing based on a preset or stored instruction. Hardware of the terminal includes but is not limited to a microprocessor, an application-specific integrated circuit, a programmable gate array, a digital processor, an embedded device, and the like. In some embodiments, the controller 14 further includes a memory, and the memory is configured to store program code and various data. The memory may include a read-only memory (Read-Only Memory, ROM), a random access memory (Random Access Memory, RAM), a programmable read-only memory (Programmable Read-Only Memory, PROM), an erasable programmable read-only memory (Erasable Programmable Read-Only Memory, EPROM), a one-time programmable read-only memory (One-time Programmable Read-Only Memory, OTPROM), an electrically-erasable programmable read-only memory (Electrically-Erasable Programmable Read-Only Memory, EEPROM), a compact disc read-only Memory (Compact Disc Read-Only Memory, CD-ROM), or another optical disk memory, magnetic disk memory, magnetic tape memory, or any other computer-readable medium that can be configured to carry or store data.

In some embodiments, the controller 14 may include an integrated circuit, for example, may include a single packaged integrated circuit, or may include a plurality of packaged integrated circuits that have a same function or different functions, including a microprocessor, a digital processing chip, a graphics processor, a combination of various control chips, and the like. The controller 14 performs various functions and processes data by running or executing a program or module stored in the memory and calling data stored in the memory.

When the integrated unit is implemented in a form of a software functional module, the integrated unit may be stored in a computer-readable storage medium. The software functional module is stored in a storage medium and includes several instructions for instructing a computer device (which may be a personal computer, a terminal, or a network device) or a processor (processor) to perform a part of the methods described in embodiments of this application.

The memory stores program code, and the controller 14 may invoke the program code stored in the memory to perform a related function. In an embodiment of this application, the memory stores a plurality of instructions, and the plurality of instructions are executed by the controller 14 to perform the fault ride-through method. Specifically, for a specific method for implementing the foregoing instruction by the controller 14, refer to descriptions of related steps in embodiments corresponding to FIG. 3 and FIG. 6. Details are not described herein again.

The fault ride-through method and the converter 1 in this embodiment are applied to an off-grid scenario, including an application scenario such as a large off-grid microgrid or a small and medium industrial and commercial microgrid.

In another embodiment of this application, the fault ride-through method and the converter 1 may also be applied to a grid-connected scenario. When the fault ride-through method and the converter 1 in this embodiment are applied to a grid-connected scenario, the current limit value needs to be set and adjusted based on a grid fault.

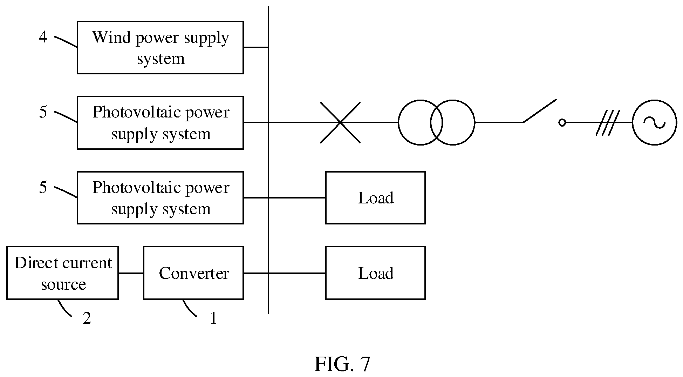

Refer to FIG. 7. In another embodiment of this application, the converter 1 may be combined with a new energy power supply system such as a wind power supply system 4 or a photovoltaic power supply system 5, to be applied to an off-grid scenario.

In conclusion, in the fault ride-through method and the converter of this embodiment, when the amplitude of the terminal voltage vector is detected to be lower than the preset terminal voltage extremum (that is, the amplitude of the filter inductor current vector is greater than the preset current limit value), it is determined that the output voltage at the output of the converter 1 is abnormal (low voltage). In this case, the internal potential vector is correspondingly reduced based on a vector constraint relationship among the internal potential vector at the first end, the terminal voltage vector at the second end, and the filter inductor current vector on the filter inductor, so that the amplitude of the filter inductor voltage drop vector can be constrained. In addition, a correspondence exists between the amplitude of the filter inductor voltage drop vector and the amplitude of the filter inductor current vector, and the filter inductor voltage drop vector is constrained, so that the filter inductor current vector output by the converter can be constrained. This helps, on a basis of preventing the amplitude of the filter inductor current vector (namely, an amplitude of an output current of the converter) from exceeding the current limit value, implement fast current response and restore the voltage at the output of the converter quickly after the fault is removed. Further, in the fault ride-through method in this application and the converter to which the method is applied, the foregoing beneficial effect is achieved by using the foregoing control procedure, without a need to add or modify a hardware structure. This further helps reduce costs.

### Embodiment 2

A main difference between a fault ride-through method in this embodiment and the fault ride-through method in Embodiment 1 lies in a manner of setting a current limit value.

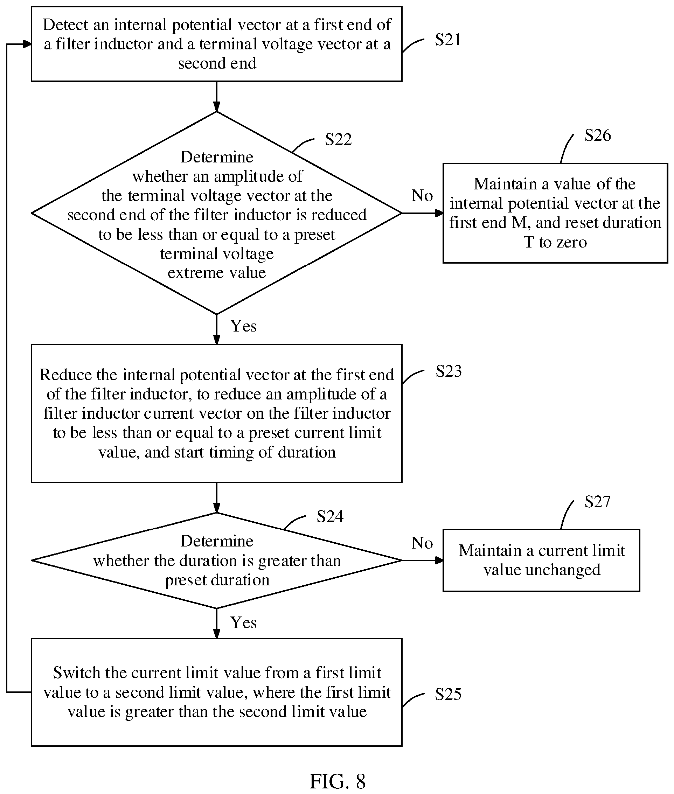

Refer to FIG. 8. In this embodiment, the fault ride-through method specifically includes the following steps.

Step S21: Detect an internal potential vector at the first end of the filter inductor and a terminal voltage vector at the second end.

Step S22: Determine whether an amplitude of the terminal voltage vector at the second end of the filter inductor is reduced to be less than or equal to a preset terminal voltage extremum.

If a determining result in step S22 is yes, step S23 is performed to reduce the internal potential vector at the first end of the filter inductor, to reduce an amplitude of a filter inductor current vector on the filter inductor to be less than or equal to a preset current limit value, and start timing of duration.

Step S24: Determine whether the duration is greater than preset duration.

If a determining result in step S24 is yes, step S25 is performed to switch the current limit value from a first limit value to a second limit value, where the first limit value is greater than the second limit value, and step S21 is performed again.

In this embodiment, step S21 is basically the same as step S11 in Embodiment 1. Details are not described herein again.

As described in Embodiment 1, when the converter 1 operates normally, the amplitude of the filter inductor current vector output by the second end N is within a rated current boundary value. Further, the converter 1 further has a maximum current limit boundary value. The maximum current limit boundary value is greater than the rated current boundary value. The converter 1 may operate within the rated current boundary value, or may operate between the maximum current limit boundary value and the rated current boundary value. When an operating current exceeds the maximum current limit boundary value, the converter 1 has a risk of being damaged.

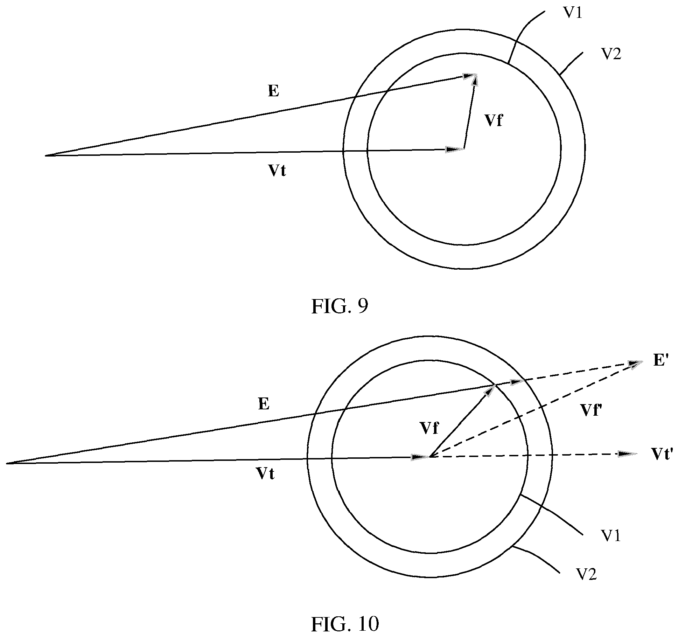

Refer to FIG. 9. Boundaries V1 and V2 of corresponding filter inductor voltage drop vector value may be determined based on the maximum current limit boundary value and the rated current boundary value. The boundary V1 corresponds to the filter inductor voltage drop vector value when the operating current of the converter 1 is the rated current boundary value, and the boundary V corresponds to the filter inductor voltage drop vector value when the operating current of the converter 1 is the maximum current limit boundary value.

When the converter 1 operates normally, a constraint relationship among the internal potential vector **E** at the first end M, the terminal voltage vector **Vt** at the second end N, and the filter inductor voltage drop vector **Vf** of the filter inductor 12 is shown in FIG. 9. The filter inductor voltage drop vector **Vf** falls within (is less than or equal to) the vector boundary V1. If it is taken into account that the output voltage of the converter 1 drops, and consequently the amplitude of the terminal voltage vector **Vt** drops, the constraint relationship among the internal potential vector **E,** the terminal voltage vector **Vt,** and the filter inductor voltage drop vector **Vf** is still maintained.

However, refer to FIG. 10. If the internal potential vector at the first end M maintains a constant voltage source mode and remains at **E'** (as shown by a dashed line), because the amplitude of the terminal voltage vector **Vt** drops, the filter inductor voltage drop vector **Vf'** in this case directly exceeds the vector boundary V2, which means that the amplitude of the filter inductor current vector in this case also exceeds the maximum current limit boundary value of the converter 1.

Therefore, in this embodiment, in step S23, the value of the internal potential vector is reduced to **E.** In this way, the filter inductor voltage drop vector **Vf** can be effectively constrained, based on the constraint relationship among the internal potential vector **E,** the terminal voltage vector **Vt** at the second end N, and the filter inductor voltage drop vector **Vf,** not to exceed the vector boundary V2. Correspondingly, this implements that the amplitude of the filter inductor current vector is limited within the current limit value Imax.

In this embodiment, the first limit value ILmt1 and the second limit value ILmt2 are preset, and the first limit value ILmt1 is greater than the second limit value ILmt1. When the first limit value ILmt1 is not greater than the maximum current limit boundary value, and the amplitude of the filter inductor current vector is equal to the first limit value ILmt1, the filter inductor voltage drop vector **Vf** is located at the vector boundary V2. When the second limit value ILmt2 is not greater than the rated current boundary value, and the amplitude of the filter inductor current vector is equal to the second limit value ILmt2, the filter inductor voltage drop vector **Vf** is located at the vector boundary V1.

In this embodiment, the current limit value is first set to the first limit value ILmt1. When it is determined in step S22 that the amplitude of the filter inductor current vector is greater than the current limit value (namely, the first limit value ILmt1), a timing procedure of the duration T is started in step S23. The duration T is duration in which the amplitude of the filter inductor current vector is between the maximum current limit boundary value and the rated current boundary value, and is also equal to duration in which the current limit value Imax is set to the first limit value ILmt1.

In this embodiment, the current limit value is set to the first limit value ILmt1 that is greater than the rated current boundary value, so that the amplitude of the filter inductor current vector can exceed the rated current boundary value. This helps improve a current response speed and quickly support a voltage on the load 3.

In this embodiment, a step of reducing the internal potential vector in step S23 is similar to step S31 and step S32 in Embodiment 1.

In this embodiment, preset duration Tset is further set, to prevent the converter 1 from being damaged. The preset duration Tset is set to limit duration in which the amplitude of the filter inductor current vector is between the maximum current limit boundary value and the rated current boundary value. In other words, when duration in which the amplitude of the filter inductor current vector is between the maximum current limit boundary value and the rated current boundary value is greater than the preset duration Tset, the converter 1 has a risk of being damaged.

If it is determined in step S24 that the duration T is greater than the preset duration Tset, step S25 is performed to reduce the current limit value Imax, and switch Imax from the first limit value ILmt1 to ILmt2, to constrain the amplitude of the filter inductor current vector to be within the rated current boundary value.

In step S24, in some embodiments, the current limit value is switched from the first limit value ILmt1 to the second limit value ILmt2 in a step-wise manner. In other words, the current limit value is directly switched from the first limit value ILmt1 to the second limit value ILmt2. In still some other embodiments, the current limit value is switched from the first limit value ILmt1 to the second limit value ILmt2 in a ramp-wise manner. In other words, the current limit value is switched a plurality of times starting from the first limit value ILmt1, and finally switched to the second limit value ILmt2, and a value switching process changes linearly. In some other embodiments, the current limit value is switched from the first limit value ILmt1 to the second limit value ILmt2 in an exponential manner. In other words, the current limit value is switched a plurality of times starting from the first limit value ILmt1, and finally switched to the second limit value ILmt2, and a value switching process changes exponentially.

In this embodiment, a specific value by which the internal potential vector **E** is reduced is controlled, so that the filter inductor voltage drop vector **Vf** is just located at the boundary V1 or the boundary V2. In this case, the amplitude of the filter inductor current vector is equal to a maximum current limit value or a rated current limit value. This helps quickly respond to a current requirement on the load 3 and support a voltage on the load 3 on a basis of keeping the amplitude of the filter inductor current vector not exceeding a maximum current limit.

In this embodiment, if the determining result in step S22 is no, step S26 is performed to maintain a value of the internal potential vector at the first end M, and reset the duration T to zero. In other words, when it is determined in step S22 that the amplitude of the filter inductor current vector does not exceed the current limit value, a voltage vector correction value is 0, to maintain the value of the internal potential vector unchanged.

In this embodiment, if a determining result in step S24 is no, it indicates that duration in which the converter 1 operates at the maximum current limit value and the rated current limit value does not reach the preset duration Tset. In this case, step S27 is performed. The current limit value Imax is still kept at the first limit value ILmt1, so that a current at the output of the converter 1 is quickly increased to quickly support a voltage at the output.

After step S23, the fault ride-through method in this embodiment further includes:
correcting a current vector reference value based on the internal potential vector instruction and a voltage vector feedback value;
setting one with a smaller absolute value of a corrected current vector reference value and the current limit value as a current vector instruction; and
generating a modulated wave based on the current vector instruction, a current vector feedback value, and a phase reference value in the converter, where the modulated wave is used to modulate a power signal provided by the direct current source to provide the power signal to the load.

The foregoing steps are described in steps S15 to S17 in Embodiment 1.

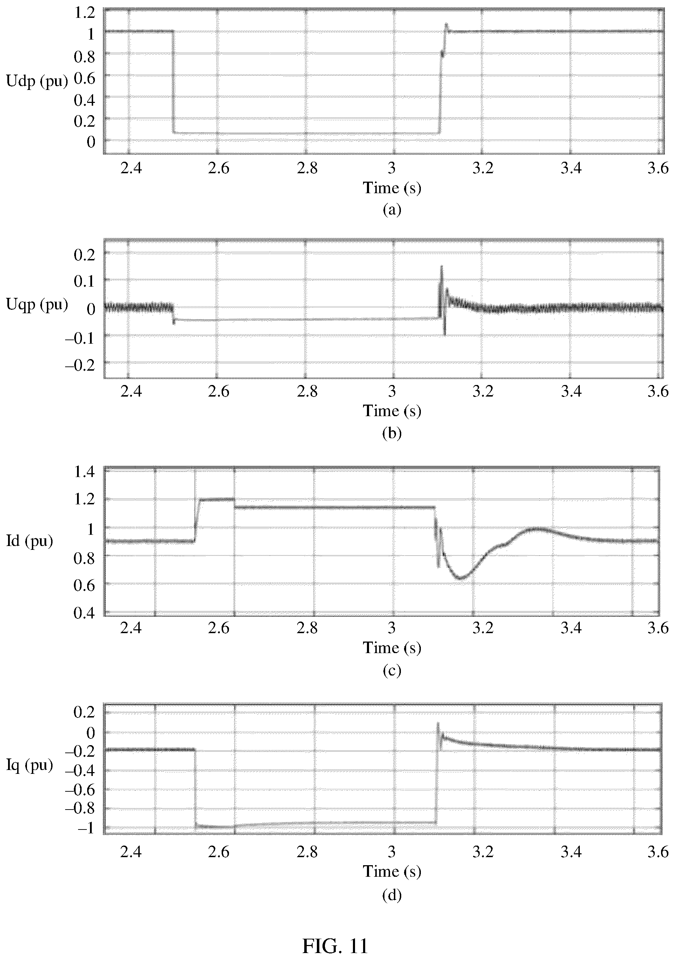

Refer to FIG. 11. A graph (a) in FIG. 11 represents a change of a per unit value Udp of a d-axis component of a terminal voltage (a voltage output to the load) at the second end with time. A graph (b) represents a change of a per unit value Uqp of a q-axis component of a terminal voltage at the second end with time. A graph (c) represents a change of a per unit value Ip of a d-axis component of each of the current vector instruction and an actual value of the converter (waveforms of the two values basically overlap, and are slightly different at 2.5 seconds and 3.1 seconds) with time. A graph (d) represents a change of a per unit value Iq of a q-axis component of each of the output current vector instruction and an actual value of the converter (waveforms of the two values basically overlap, and are slightly different at 2.5 seconds and 3.1 seconds) with time. In the foregoing graphs (a), (b), (c), and (d), a unit of a horizontal coordinate is second, and a unit of a vertical coordinate is pu.

The graph (c) in FIG. 11 is used as an example. It can be seen that a voltage output at the second end is abnormal at about 2.5 seconds. In this case, the current vector instruction of the converter quickly responds, and the limit value is quickly switched at 2.6 seconds. After an abnormality is removed at 3.4 seconds, as shown in the graph (a) in FIG. 11, the output voltage at the second end is quickly restored to a normal level.

The fault ride-through method in this embodiment is also applied to the controller 14 of the converter 1, and the controller 14 is specifically described in Embodiment 1. In addition, the converter 1 in this embodiment may be used in any grid scenario described in Embodiment 1.

The fault ride-through method and the converter in this embodiment can implement all the beneficial effect described in Embodiment 1. On this basis, the current limit value is increased (the current limit value is first set to the larger first limit value ILmt1, and then switched to the smaller second limit value ILmt2). This further improves a current response speed and a voltage recovery speed of the converter 1, to better support functions of the converter 1, so that stability of an output voltage of the converter 1 is improved.

A person of ordinary skill in the art should be aware that the foregoing implementations are merely used to describe the present invention, but are not intended to limit the present invention. Appropriate modifications and variations made to the foregoing embodiments shall fall within the protection scope of the present invention provided that the modifications and variations fall within the substantive scope of the present invention.

## Claims

1. A fault ride-through method, applied to a converter, wherein the converter comprises a conversion circuit and a filter inductor, an input of the conversion circuit is configured to connect to a direct current source, a first end of the filter inductor is configured to connect to an output of the conversion circuit, and a second end of the filter inductor is configured to connect to a load; and
the fault ride-through method is performed by the converter, and the fault ride-through method comprises:
detecting an internal potential vector at the first end of the filter inductor and a terminal voltage vector at the second end; and
when an amplitude of the terminal voltage vector is reduced to be less than or equal to a preset terminal voltage extremum, reducing the internal potential vector at the first end of the filter inductor, to reduce an amplitude of a filter inductor current vector on the filter inductor to be less than or equal to a preset current limit value, wherein the internal potential vector, the terminal voltage vector, and the filter inductor current vector form a trigonometric function relationship.

2. The fault ride-through method according to claim 1, wherein the current limit value is less than or equal to an upper limit value bearable by a hardware capability of the converter or allowable for normal operation, and when the amplitude of the terminal voltage vector at the second end of the filter inductor is less than the preset terminal voltage extremum and the filter inductor current vector is greater than the upper limit value, the internal potential vector at the first end of the filter inductor is controlled to decrease by using the converter, so that the filter inductor current vector is reduced to be less than or equal to the upper limit value.

3. The fault ride-through method according to claim 2, wherein the upper limit value is greater than a rated current value of the converter.

4. The fault ride-through method according to any one of claims 1 to 3, wherein a current vector feedback value at the second end of the filter inductor or a current vector reference value of the converter is used as the amplitude of the filter inductor current vector.

5. The fault ride-through method according to claim 4, wherein a vector value with a larger absolute value of the current vector feedback value and the current vector reference value is used as the amplitude of the filter inductor current vector.

6. The fault ride-through method according to any one of claims 2 to 5, wherein when the filter inductor current vector is greater than the upper limit value, the fault ride-through method further comprises:
starting timing of duration; and
when the duration is greater than preset duration, switching the current limit value from a first limit value to a second limit value, wherein the first limit value is greater than the second limit value.

7. The fault ride-through method according to claim 6, wherein the switching the current limit value from a first limit value to a second limit value comprises:
switching the current limit value from the first limit value to the second limit value in a step-wise manner, a ramp-wise manner, or an exponential manner.

8. The fault ride-through method according to claim 6 or 7, wherein the fault ride-through method further comprises:
when the duration is less than or equal to the preset duration, maintaining the current limit value unchanged.

9. The fault ride-through method according to any one of claims 6 to 8, wherein the fault ride-through method further comprises:
when the amplitude of the filter inductor current vector is less than or equal to the current limit value, resetting the duration to zero.

10. The fault ride-through method according to any one of claims 1 to 9, wherein the reducing the internal potential vector at the first end of the filter inductor comprises:
generating an internal potential reference correction value based on a difference between the amplitude of the filter inductor current vector and the current limit value;
generating an internal potential vector instruction based on the internal potential reference correction value and an internal potential vector reference value of the converter; and
reducing the internal potential vector based on the internal potential vector instruction.

11. The fault ride-through method according to claim 10, wherein the fault ride-through method further comprises:
correcting the current vector reference value based on the internal potential vector instruction and a voltage vector feedback value;
setting one with a smaller absolute value of a corrected current vector reference value and the current limit value as a current vector instruction; and
generating a modulated wave based on the current vector instruction, the current vector feedback value, and a phase reference value in the converter, wherein the modulated wave is used to modulate a power signal provided by the direct current source to provide the power signal to the load.

12. A converter, wherein the converter comprises:
a conversion circuit, wherein an input of the conversion circuit is configured to connect to a direct current source;
a filter inductor, wherein a first end of the filter inductor is configured to connect to an output of the conversion circuit, and a second end of the filter inductor is configured to connect to a load;
a detection circuit, wherein the detection circuit is connected to the first end and the second end, and is configured to detect an internal potential vector at the first end of the filter inductor and a terminal voltage vector at the second end; and
a controller, wherein the controller is connected to the detection circuit, and is configured to: when an amplitude of the terminal voltage vector at the second end of the filter inductor is reduced to be less than or equal to a preset terminal voltage extremum, reduce the internal potential vector at the first end of the filter inductor, to reduce an amplitude of a current vector on the filter inductor to be less than or equal to a preset current limit value, wherein the internal potential vector, the terminal voltage vector, and the filter inductor current vector form a trigonometric function relationship.

13. The converter according to claim 12, wherein the current limit value is less than or equal to an upper limit value bearable by a hardware capability of the converter or allowable for normal operation, and when the amplitude of the terminal voltage vector at the second end of the filter inductor is less than the preset terminal voltage extremum and the filter inductor current vector is greater than the upper limit value, the internal potential vector at the first end of the filter inductor is controlled to decrease by using the converter, so that the filter inductor current vector is reduced to be less than or equal to the upper limit value.

14. The converter according to claim 12 or 13, wherein the controller is configured to:
generate an internal potential reference correction value based on a difference between the amplitude of the filter inductor current vector and the current limit value;
generate an internal potential vector instruction based on the internal potential reference correction value and an internal potential vector reference value of the converter; and
reduce the internal potential vector based on the internal potential vector instruction.

15. The converter according to claim 14, wherein the controller is configured to:
correct a current vector reference value based on the internal potential vector instruction and a voltage vector feedback value;
set one with a smaller absolute value of a corrected current vector reference value and the current limit value as a current vector instruction; and
generate a modulated wave based on the current vector instruction, a current vector feedback value, and a phase reference value in the converter, wherein the modulated wave is used to modulate a power signal provided by the direct current source to provide the power signal to the load.
